# EUROPÄISCHE PATENTSCHRIFT

(11) **EP 1 024 276 B1**
(45) Veröffentlichungstag und Bekanntmachung des Hinweises auf die Patenterteilung: **02.03.2005**
(21) Anmeldenummer: 99123317.2
(22) Anmeldetag: 23.11.1999
(51) Int. Cl.: F02F 7/00, F16F 15/26, F02B 75/06

(54) **Hubkolben-Brennkraftmaschine**
Internal combustion piston engine
Moteur à pistons à combustion interne

(30) Priorität: 26.01.1999 DE 19902921
(43) Veröffentlichungstag der Anmeldung: 02.08.2000
(73) Patentinhaber: DaimlerChrysler AG, 70567 Stuttgart (DE)
(72) Erfinder: Doll, Roland, 73235 Weilheim (DE); Engels, Hartmut, 72649 Wolfschlugen (DE); Rau, Erhard, 73235 Weilheim (DE)

(56) Entgegenhaltungen:
- DE-A- 4 134 399
- US-A- 4 509 378
- US-A- 4 926 810

## Beschreibung

Die Erfindung bezieht sich auf eine Hubkolben-Brennkraftmaschine mit einer in Lagern aufgenommenen Kurbelwelle, einem Massenausgleich erster Ordnung und einem Lanchesterausgleich, zu dem zwei in Lagern aufgenommene Wellen gehören, die in einem Kurbelgehäuse aufgenommen sind.

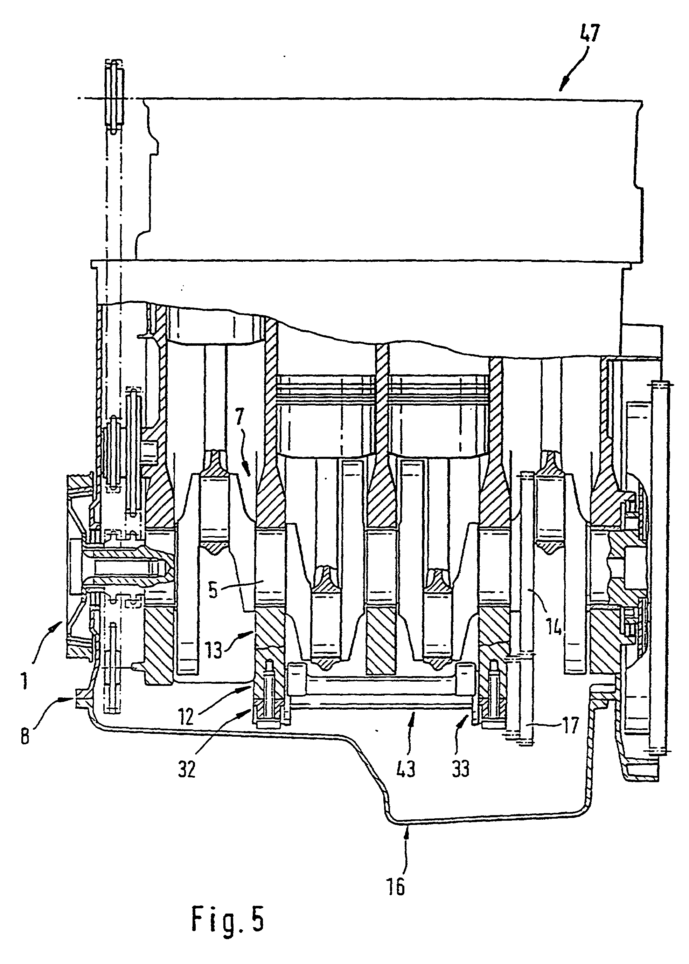

Die Druckschrift 1 (DE 38 24 553 C1) zeigt eine Hubkolben-Brennkraftmaschine mit einem Kurbelwellenlager und einem Massenausgleich (Lanchester) zweiter Ordnung, die in einem Kurbelgehäuse aufgenommen sind, wobei zumindest ein Lagerunterteil des Lagers der Kurbelwelle mit mindestens einem Lager der Lanchester-Welle verbunden ist. Das Lager ist hierzu an der Unterseite der Lagerbrücke angeformt. Das Lageroberteil der Ausgleichswellen zweiter Ordnung ist mit der Lagerbrücke und nicht einteilig mit dem Lagerunterteil verbunden. Gemäß Figur 5 ist keine Trennebene der Ausgleichslagerschalen und keine Verschraubung der Ausgleichslager offenbart. Zumindest die Trennebene wäre aber notwendig, um die Montage der Ausgleichswellen zu realisieren. Demnach ist aus dieser Druckschrift das erfindungsgemäße Lager bzw. die einteilige Ausbildung von Lagerunterteil der Kurbelwelle und Lageroberteil der Lanchester-Welle nicht zu entnehmen.

Die Druckschrift 2 (DE 41 34 399 A1)zeigt auch eine Hubkolben-Brennkraftmaschine für ein Kraftfahrzeug, die eine in Lagern aufgenommene Kurbelwelle und einen Massenausgleich erster Ordnung sowie einen Massenausgleich zweiter Ordnung zeigt, zu der mehrere in Lagern aufgenommene Wellen gehören, die in einem Kurbelwellengehäuse aufgenommen sind. Das Lagergehäuse des Massenausgleichs zweiter Ordnung (Lanchester-Ausgleich) ist über eine Flanschverbindung lösbar mit dem Kurbelgehäuse der Kurbelwelle verbunden. Die getrennte Bauweise des untergehängten Lanchester-Gehäuses führt zu einem erheblichen Arbeitsaufwand bei der Herstellung der Lager der Kurbelwelle und der Lager des Lanchester-Massenausgleichs, insbesondere deshalb, weil für die Bearbeitung der Lager ein sehr häufiges Umspannen der einzelnen Bauteile erforderlich ist. Ein erheblicher Arbeitsaufwand zur Bearbeitung der Lager ist auch erforderlich, um ein exaktes Stichmaß zwischen den Lagern der Kurbelwelle und den Lagern des Lanchesters zu erreichen.

Aus der Druckschrift 3 (US 4,926,810) ist eine Hubkolben-Brennkraftmaschine mit einer in Lagern aufgenommenen Kurbelwelle bekannt, die einen desmodromischen Massenausgleich aufweist. Der Massenausgleich besteht aus Massenausgleichsgewichten, die jeweils mit einem Kurbelwellenlager verbunden sind.

Der Erfindung liegt die Aufgabe zugrunde, den Lagerdeckel bzw. das Lageroberteil des Massenausgleichs zweiter Ordnung in das Lager der Kurbelwelle zu integrieren.

Gelöst wird die Aufgabe erfindungsgemäß dadurch, daß zumindest ein Lagerunterteil des Lagers der Kurbelwelle mit mindestens einem Lager der Lanchester-Welle zu einem einteiligen Bauteil verbunden ist, wobei das einteilige Bauteil einerseits an ein Lageroberteil der Kurbelwelle, andererseits an ein Lagerunterteil der Lanchester-Welle angeschlossen ist. Hierdurch wird erreicht, daß der Bearbeitungsaufwand der nun vermiedenen Trennfläche sowie die damit verbundenen Toleranzprobleme entfallen. Die Bearbeitung der Lager, der Kurbelwelle und der Lanchester-Welle sind auf einfache Weise möglich, ohne daß die Werkstücke mehrmals umgespannt werden müssen. Das führt auch dazu, daß das Stichmaß zwischen den Lagern der Kurbelwelle und den Lagern der Lanchester-Wellen exakt eingehalten werden kann und auf diese Weise das Zahnflankenspiel auf ein Minimum reduziert werden kann. Hierdurch werden die Laufgeräusche des Motors ebenfalls erheblich verringert. Durch die einteilige Bauweise von Lagerunterteil der Kurbelwelle und Lageroberteil der Lanchester-Welle wird neben der Bearbeitungszeit auch die Zeit zur Montage der einzelnen Wellen sowie das Zahnflankenspiel und somit der Einstellungsaufwand erheblich reduziert. Sollte eine nachträgliche Justierung der Lager erforderlich sein, so läßt sich dies durch die Verwendung unterschiedlich dimensionierter Lagerschalen bewerkstelligen. Die Lanchester-Welle läßt sich darüber hinaus in ihrem Längsaufbau und bezüglich der entsprechenden Durchmesser so optimieren, daß eine Positionierung der einzelnen Wellen bei Sicherstellung eines höchstmöglichen Freiheitsgrades bewerkstelligt werden kann.

Ferner ist es vorteilhaft, daß das einteilige Bauteil der Kurbelwelle neben den beiden Lageroberteilen für die beiden Lanchester-Wellen ein weiteres Lagerunterteil für eine dritte Welle des Lanchesters aufweist. Durch die einteilige Bauweise des Lagerunterteils der Kurbelwelle in Verbindung mit dem Lageroberteil der Lanchester-Wellen ist es ebenfalls möglich, in diesem Teil ein weiteres Lagerelement für eine dritte Welle zu integrieren, wodurch sich ebenfalls die Herstellungskosten und Montagezeiten wesentlich reduzieren und sich das Flankenspiel verringern läßt.

Eine zusätzliche Möglichkeit ist gemäß einer Weiterbildung der erfindungsgemäßen Vorrichtung, daß das Lagerunterteil der Kurbelwelle und die beiden Lageroberteile der nebeneinander liegenden Lanchester Wellen sowie das Lagerunterteil für die dritte Welle des Lanchesters einteilig miteinander verbunden sind bzw. eine Baueinheit bzw. ein Bauteil bilden.

Gemäß einer bevorzugten Ausführungsform der erfindungsgemäßen Lösung ist schließlich vorgesehen, daß das einteilige Bauteil über Verbindungselemente mit dem Lageroberteil der Kurbelwelle und/oder mit Teilen des Kurbelgehäuses lösbar verbunden ist.

Von besonderer Bedeutung ist für die vorliegende Erfindung, daß das einteilige Bauteil über Zugankerschrauben mit dem Lageroberteil der Kurbelwelle und/oder dem Zylinderkopf verbunden ist und über Zugankerschrauben mit dem Lageroberteil der Kurbelwelle und zusätzlich über Querverschraubungselemente mit dem Kurbelgehäuse bzw. mit einem Lagerstuhl verbunden ist. Hierdurch wird eine sehr exakte und einwandfreie Integrierung von Lagerunterteil der Kurbelwelle und Lageroberteil der Lanchester-Wellen im Kurbelgehäuse sichergestellt und eine sitzende Befestigung geschaffen.

Vorteilhaft ist es ferner, daß auf der Kurbelwelle ein Abtriebsrad vorgesehen ist, das über ein erstes Antriebsrad mit der ersten Lanchester-Welle antriebsverbunden ist, das wiederum mit einem zweiten Antriebsrad der zweiten Lanchester-Welle in Antriebsverbindung steht.

Außerdem ist es vorteilhaft, daß das auf der Kurbelwelle angeordnete Abtriebsrad über das erste Antriebsrad mit der ersten Lanchester-Welle und mit einem dritten Antriebsrad der dritten Lanchester-Welle in Antriebsverbindung steht. Hierdurch wird auch gewährleistet, daß die Wellen der Lanchester-Anordnung möglichst nahe in dem Bereich der Kurbelwellen plaziert werden, so daß hier auch der Platzbedarf der einzelnen Wellen im Kurbelgehäuse klein gehalten werden kann.

Vorteilhaft ist es ferner, daß die Lager bzw. die Lagerschalen der Kurbelwelle und/oder Lager bzw. die Lagerschalen der Lanchester-Wellen aus dem gleichen oder annähernd gleichen Werkstoff mit gleichem oder ahnähernd gleichem Wärmeausdehnungskoeffizient wie die Kurbelwelle bestehen.

Weitere Vorteile und Einzelheiten der Erfindung sind in den Patentansprüchen und in der Beschreibung erläutert und in den Figuren dargestellt.

Es zeigt:
- Figur 1: einen Querschnitt durch eine Hubkolben-Brennkraftmaschine mit einer in Lagern aufgenommenen Kurbelwelle und einem Lanchesterausgleich,
- Figur 2: ein zweites Ausführungsbeispiel der Hubkolben-Brennkraftmaschine mit Lanchesterausgleich, wobei der Lanchesterausgleich drei Wellen aufweist,
- Figur 3: eine perspektivische Darstellung der einzelnen Lagerunterteile zur Aufnahme der Kurbelwelle mit dem zwei Wellen aufweisenden Lanchesterausgleich,
- Figur 4: eine Schnittdarstellung eines Teils des Kurbelgehäuses mit dem einteiligen Lageroberteil und Lagerunterteil,
- Figur 5: einen Längsschnitt eines Vierzylindermotors mit einem Massenausgleich erster Ordnung und einem Lanchester-Ausgleich (Massenausgleich zweiter Ordnung).

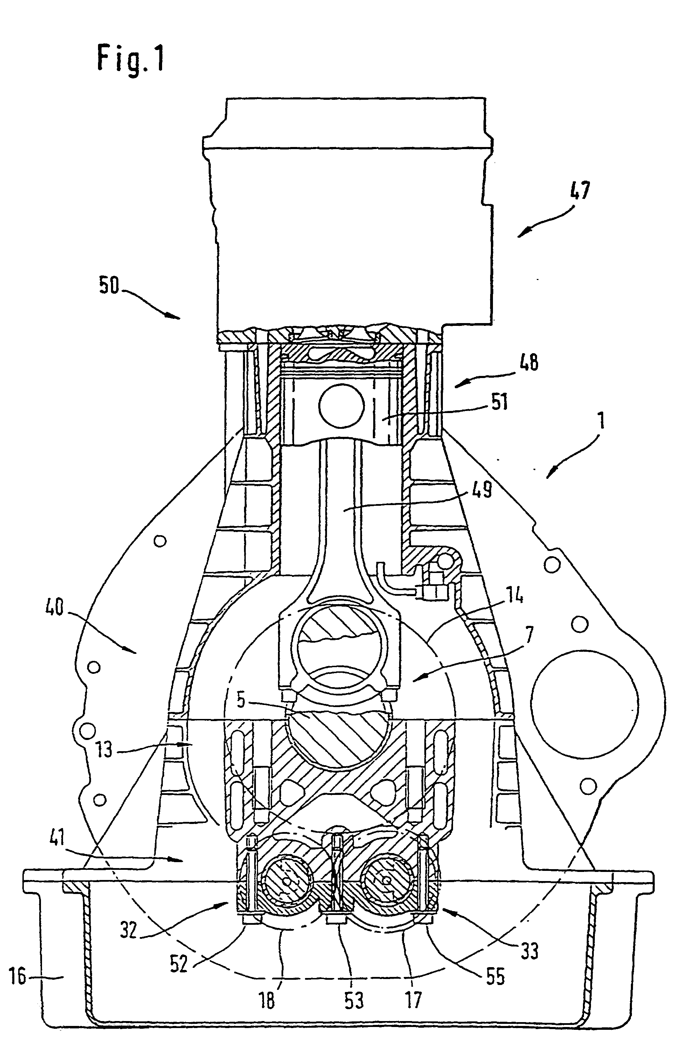

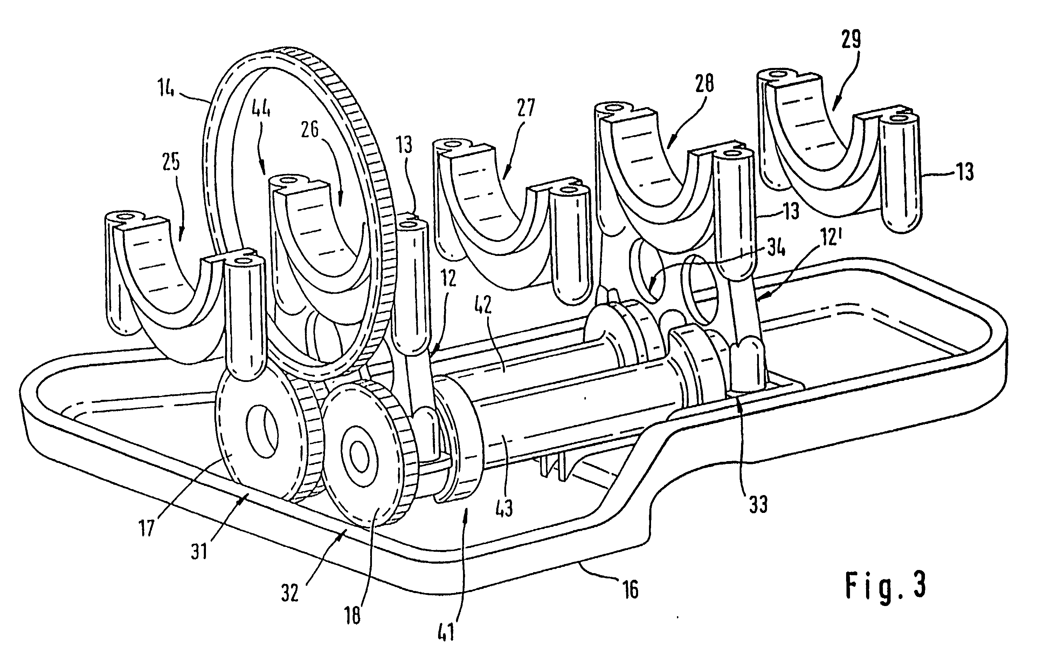

In der Zeichnung ist mit 50 eine Hubkolben-Brennkraftmaschine bezeichnet, die beispielsweise als Viertaktzylindermotor ausgebildet sein kann und ein Kurbelgehäuse 1 umfaßt, das in Fig. 1 und 5 einen Zylinderblock 48 zeigt, auf dem ein Zylinderkopf 47 mittels Zugankerschrauben 23 befestigt ist. In dem Kurbelgehäuse 1 befindet sich eine Kurbelstange 49, die an ihrem oberen Ende mit einem Kolben 51 verbunden ist und mit ihrem anderen Ende an eine Kurbelwelle 5 angeschlossen ist. In dem Kurbelgehäuse 1 befindet sich ein der Kurbelwelle 5 zugeordneter Massenausgleich 40 erster Ordnung und ein Lanchesterausgleich 41 (Massenausgleich zweiter Ordnung), die insbesondere in Fig. 3 veranschaulicht sind.

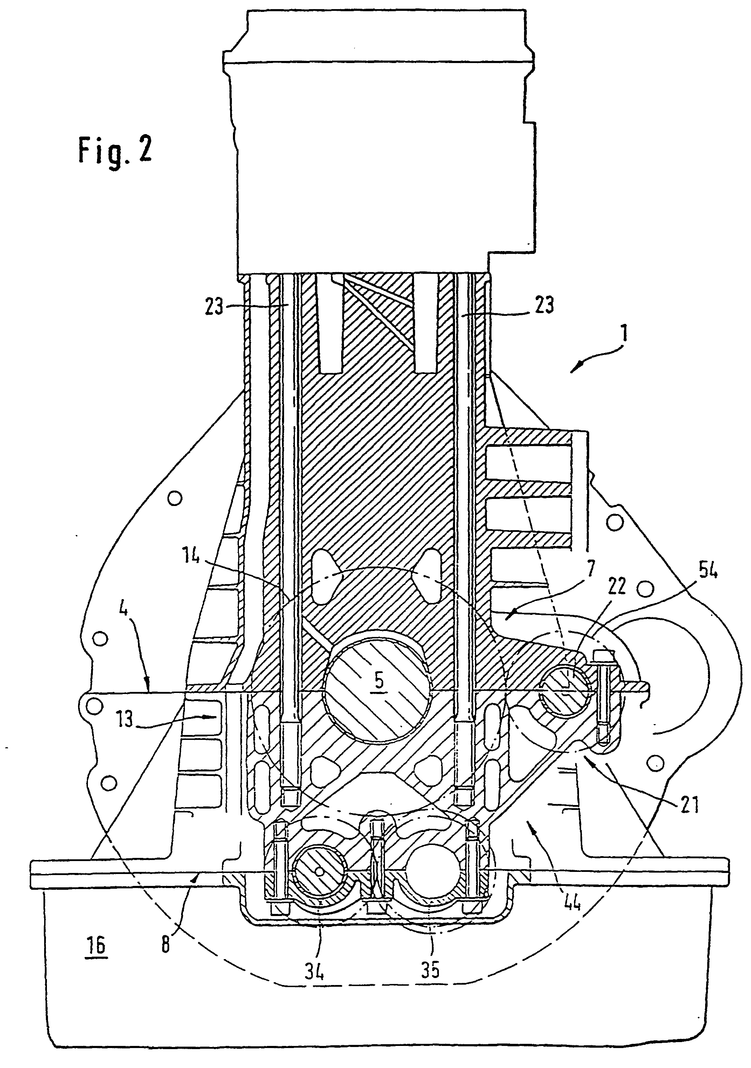

In Fig. 3 ist die Kurbelwelle 5 weggelassen und nur deren Lager 25, 26, 27, 28 und 29 dargestellt. Die Lager 25 bis 29 sind über in Fig. 1, 2 dargestellte Schrauben bzw. Zugankerschrauben 23 mit Lageroberteilen 7 und dem Zylinderkopf 47 (vgl. Fig. 1) lösbar verbunden.

Die einzelnen Lager 25 bis 29 werden also durch je ein Lageroberteil 7 und durch je ein Lagerunterteil 13 zur Aufnahme der Kurbelwelle 5 gebildet.

Die Lageroberteile 7 bzw. Lagerdeckel können aus einem ähnlichen Werkstoff mit ähnlichem Wärmeausdehnungskoeffizenten wie die Kurbelwelle 5 ausgebildet sein. Das Lagerunterteil 13 bzw. der Lagerstuhl der Kurbelwelle 5 kann ebenfalls aus einem ähnlichen Werkstoff mit gleichem Wärmeausdehnungskoeffizienten wie die Kurbelwelle 5 gebildet sein. Beispielsweise ist es möglich, hierfür GGG, Sinter-Alu oder andere Verbundwerkstoffe zu wählen. Die in Fig. 3 perspektivisch dargestellten Lagerunterteile 26 und 28 sind einteilig mit einem Lageroberteil 12 bzw. 12' des Lanchesterausgleichs verbunden. Das Lagerunterteil 26 bzw. 28 und das Lageroberteil 12, 12' bilden also eine Baueinheit bzw. ein einteiliges Bauteil 44. Das aus den Teilen 26 und 12 gebildete Bauteil 44 ist ebenfalls über die in Fig. 1 bzw. 2 dargestellten Zugankerschrauben 23 mit dem Zylinderkopf 47 lösbar verbunden.

Der Lanchesterausgleich 41 weist zwei parallel zueinander verlaufende Wellen 42 und 43 auf, die in Lagerschalen 34 und 35 drehbar aufgenommen sind, die über die Schrauben 52, 53, 55 mit dem Lagerunterteil 13 lösbar verbunden sind.
Der Antrieb der Lanchester-Wellen 42 und 43 erfolgt gemäß Fig. 3 über ein Zahnradgetriebe. Hierzu gehört ein auf der Kurbelwelle 5 angeordnetes Antriebsrad 14, das in Eingriff mit einem ersten Antriebsrad 17 und einem getriebenen Zahnrad 18 des Lanchesterausgleichs steht. Die Lanchester-Wellen 42 und 43 liegen etwas oberhalb einer Kurbelwanne 16. Das Antriebsrad 14 ist auf der Kurbelwelle 5 drehfest angeordnet, während das Antriebsrad 17 auf der Lanchester-Welle 42 und das getriebene Zahnrad 18 auf der Lanchester-Welle 43 drehfest vorgesehen ist. Die beiden Lanchester-Wellen 42 und 43 verlaufen parallel zueinander auf einer horizontal verlaufenden Querebene 8.

Nach einem weiteren Ausführungsbeispiel gemäß Fig. 2 kann der Lanchesterausgleich auch aus mindestens drei Wellen 42, 43, 22 bestehen, wobei das Abtriebsrad 14 über ein auf der dritten Welle 22 angeordnetes Zahnrad 54 direkt antreibt. Die dritte Welle 22 liegt in etwa auf der gleichen Höhe wie die Lager 25 bis 29 der Kurbelwelle 5, also auf einer horizontalen Querebene 4.

Das Antriebsrad 14 steht ferner, wie bereits erwähnt, mit dem Antriebsrad 17 der Welle 42 in Antriebsverbindung, die wiederum die Welle 43 über das Antriebsrad 18 antreibt.

Ein Lagerunterteil 21 der dritten Welle 22 bildet mit den entsprechenden Lageroberteilen 12 der beiden parallel zueinander verlaufenden Wellen 42 und 43 ebenfalls ein einteiliges Bauteil 44, das über die Zugankerschrauben 23 gemäß Fig. 1, 2 mit dem Lageroberteil 7 und auch mit dem Zylinderkopf 47 lösbar verbunden ist.

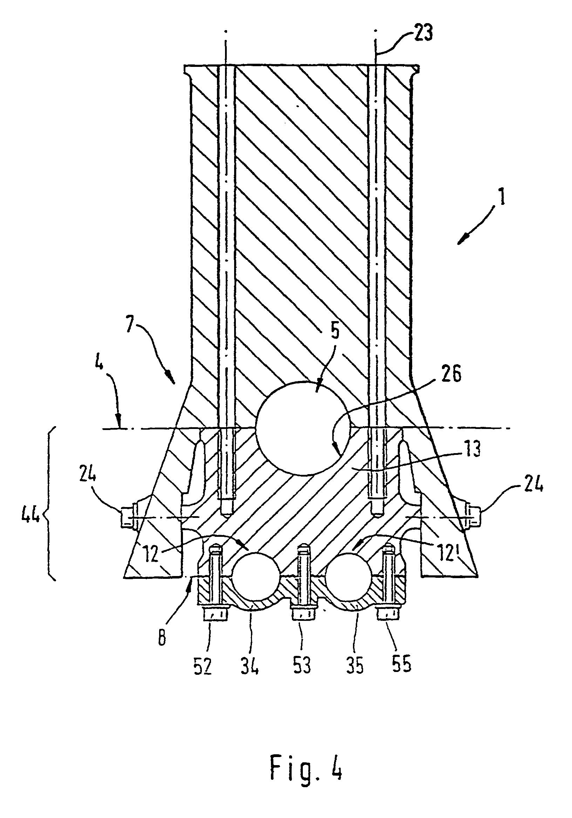

Das einteilige Bauteil 44 der Lanchester-Wellen 42, 43 und 22 kann gemäß Fig. 4 über Querverschraubungselemente 24 mit dem Unterteil des Kurbelgehäuses 1 zusätzlich lösbar verbunden werden.

In Fig.5 ist ein Vierzylindermotor im Schnitt dargestellt. Aus dieser Zeichnung ist ersichtlich, daß die Kurbelwelle 5 und die fünf hintereinanderliegenden Lager 25 bis 29 über Zugankerschrauben 23 (vergleiche Fig. 2) mit einem Zylinderkopf 47 lösbar verbunden sind und bei diesem Ausführungsbeispiel nur das zweite und
vierte Lagerunterteil 13 mit dem Lageroberteil 12 bzw. 12' ein einteiliges Bauteil 44 bilden. Ferner kann nach diesem Beispiel die Welle 43 den Lanchesterausgleich aufweisen, während die erste Welle 42 als glatte Welle ohne Massenausgleich ausgebildet sein kann.

Ferner ist es möglich, daß das Antriebsrad 14 als Kettenrad ausgebildet ist und über ein Zugmittel 19 mit einem der Antriebsräder der Welle 42 in Antriebsverbindung steht.

Bei der Vierzylinder- Motorversion gemäß Fig. 5 ist das Lagerunterteil 13 der Kurbelwelle über kurze Schrauben 23'

Die Trennlinie 8 zwischen der Kurbelwanne 16 und dem Kurbelgehäuse 1 liegt in etwa auf der gleichen horizontalen Querebene wie die durch die beiden Wellen 42, 43 verlaufende Querebene bzw. Trennlinie zwischen den Lageroberteilen 12, 12' des einteiligen Bauteils 44 und den Lagerunterteilen 34, 35 des Lanchesters.

## Patentansprüche

1. Hubkolben-Brennkraftmaschine (50) mit einer in Lagern (25 bis 29) aufgenommenen Kurbelwelle (5) und einem Massenausgleich (40) erster Ordnung und einem Lanchesterausgleich (41), zu dem zwei in Lagern (26 und 28) aufgenommene Wellen (42, 43) gehören, die in einem Kurbelgehäuse (1) aufgenommen sind, wobei zumindest ein Lagerunterteil (13) des Lagers (26, 28) der Kurbelwelle (5) mit mindestens einem Lager (34, 35) der Lanchester-Welle (42, 43) zu einem einteiligen Bauteil (44) verbunden ist, wobei das einteilige Bauteil (44) einerseits an ein Lageroberteil (7) der Kurbelwelle (5), andererseits an ein Lagerunterteil (12, 12') der Lanchester-Welle (42, 43) angeschlossen ist.

2. Vorrichtung nach Anspruch 1,
**dadurch gekennzeichnet,**
**dass** das einteilige Bauteil (44) der Kurbelwelle (5) neben den beiden Lageroberteilen (12, 12') für die beiden Lanchester-Wellen (42, 43) ein weiteres Lagerunterteil (21) für eine dritte Welle (22) des Lanchesters aufweist.

3. Vorrichtung nach Anspruch 1 oder 2,
**dadurch gekennzeichnet,**
**dass** das Lagerunterteil (13) der Kurbelwelle (5) und die beiden Lageroberteile (12) der nebeneinander liegenden Lanchester-Wellen (42, 43) sowie das Lagerunterteil (21) für die dritte Welle (22) des Lanchesters einteilig miteinander verbunden sind bzw. eine Baueinheit bzw. ein Bauteil (44) bilden.

4. Vorrichtung nach Anspruch 1 und 3,
**dadurch gekennzeichnet,**
**dass** das einteilige Bauteil (44) über Verbindungselemente mit dem Lageroberteil (7) der Kurbelwelle (5) und/oder mit Teilen des Kurbelgehäuses (1) lösbar verbunden ist.

5. Vorrichtung nach einem der vorhergehenden Ansprüche,
**dadurch gekennzeichnet,**
**dass** das einteilige Bauteil (44) über Zugankerschrauben (23) mit dem Lageroberteil (7) der Kurbelwelle (5) und/oder dem Zylinderkopf (47) verbunden ist.

6. Vorrichtung nach einem der vorhergehenden Ansprüche,
**dadurch gekennzeichnet,**
**dass** das einteilige Bauteil (44) über Zugankerschrauben (23) mit dem Lageroberteil (7) der Kurbelwelle (5) und zusätzlich über Querverschraubungselemente (24) mit dem Kurbelgehäuse (1) bzw. mit einem Lagerstuhl verbunden ist.

7. Vorrichtung nach einem der vorhergehenden Ansprüche,
**dadurch gekennzeichnet,**
**dass** auf der Kurbelwelle (5) ein Abtriebsrad (14) vorgesehen ist, das über ein erstes Antriebsrad (17) mit der ersten Lanchester-Welle (42) antriebsverbunden ist, das wiederum mit einem zweiten Antriebsrad (18) der zweiten Lanchester-Welle (43) in Antriebsverbindung steht.

8. Vorrichtung nach einem der vorhergehenden Ansprüche,
**dadurch gekennzeichnet,**
**dass** das auf der Kurbelwelle (5) angeordnete Abtriebsrad (14) über das erste Antriebsrad (17) mit der ersten Lanchester-Welle (42) und mit einem dritten Antriebsrad (54) der dritten Lanchester-Welle (22) in Antriebsverbindung steht.

9. Vorrichtung nach einem der vorhergehenden Ansprüche,
**dadurch gekennzeichnet,**
**dass** die Lager bzw. die Lagerschalen (27 bis 29) der Kurbelwelle (5) und/oder Lager bzw. die Lagerschalen der Lanchester-Wellen (42, 43) aus dem gleichen oder annähernd gleichen Werkstoff mit gleichem oder annähernd gleichem Wärmeausdehnungskoeffizient wie die Kurbelwelle (5) bestehen.

## Claims

1. A reciprocating internal combustion engine (50) having a crankshaft (5) mounted in bearings (25 to 29) and a balancing mass (40) of the first order and a Lanchester mass (41) to which belong two shafts (42, 43) which are mounted in bearings (26 and 28) are accommodated in a crankcase (1), at least one lower bearing part (13) of the bearing (26, 28) of the crankshaft (5) being connected to at least one bearing (34, 35) of the Lanchester shaft (42, 43) to form a single-piece component (44), the single-piece component (44) being linked on one side to an upper bearing part (7) of the crankshaft (5) and on the other to a lower bearing part (12, 12') of the Lanchester shaft (42, 43).

2. A device in accordance with claim 1,
**characterised in that**
in addition to the two upper bearing parts (12, 12') for the two Lanchester shafts (42, 43), the single-piece component (44) of the crankshaft (5) also has a further lower bearing part (21) for a third shaft (22) of the Lanchester.

3. A device in accordance with claim 1 or 2,
**characterised in that**
the lower bearing part (13) of the crankshaft (5) and the two upper bearing parts (12) of the Lanchester shafts (42, 43) which are positioned adjacent to one another and the lower bearing part (21) for the third shaft (22) of the Lanchester are connected together in one piece or form an assembly or component (44).

4. A device in accordance with claim 1 and 3,
**characterised in that**
the single-piece component (44) is connected by connecting elements to the upper bearing part (7) of the crankshaft (5) and/or to parts of the crankcase (1) in such a manner that it can be detached.

5. A device in accordance with one of the preceding claims,
**characterised in that**
the single-piece component (44) is connected by anchoring screws (23) to the upper bearing part (7) of the crankshaft (5) and/or to the cylinder head (47).

6. A device in accordance with one of the preceding claims,
**characterised in that**
the single-piece component (44) is connected by anchoring screws (23) to the upper bearing part (7) of the crankshaft (5) and in addition by transverse screw elements (24) to the crankcase (1) or a bearing block .

7. A device in accordance with one of the preceding claims,
**characterised in that**
provided on the crankshaft (5) is a driven gear (14) which is connected in a driving arrangement via a first driving gear (17) to the first Lanchester shaft (42) which is in turn linked in a driving connection to a second driving gear (18) on the second Lanchester shaft (43).

8. A device in accordance with one of the preceding claims,
**characterised in that**
the driving gear (14) positioned on the crankshaft (5) is connected in a driving arrangement via the first driving gear (17) to the first Lanchester shaft (42) and to a third driving gear (54) on the third Lanchester shaft (22).

9. A device in accordance with one of the preceding claims,
**characterised in that**
the bearings or the bearing shells (27 to 29) of the crankshaft (5) and/or bearings or bearing shells of the Lanchester shafts (42, 43) are made of an identical or similar material with an identical or similar coefficient of thermal expansion as the crankshaft (5).

## Revendications

1. Moteur à pistons alternatifs (50) à combustion interne comportant un vilebrequin (5) reçu dans des paliers (25 à 29) et un équilibrage des masses (40) de premier ordre et un équilibrage dit de Lanchester (41) auquel appartiennent deux arbres (42, 43) reçus dans des paliers (26 et 28) et logés dans un carter de vilebrequin (1), au moins une partie de palier inférieure (13) du palier (26, 28) du vilebrequin (5) étant reliée à au moins un palier (34, 35) de l'arbre de Lanchester (42, 43) pour former un composant d'un seul tenant (44), le composant d'un seul tenant (44) étant raccordé d'une part à une partie de palier supérieure (7) du vilebrequin (5) et d'autre part à une partie de palier inférieure (12, 12') de l'arbre de Lanchester (42, 43).

2. Dispositif selon la revendication 1, **caractérisé en ce que** le composant d'un seul tenant (44) du vilebrequin (5) comprend, outre les deux parties de palier supérieures (12, 12') pour les deux arbres de Lanchester (42, 43), une autre partie de palier inférieure (21) pour un troisième arbre (22) du Lanchester.

3. Dispositif selon l'une ou l'autre des revendications 1 et 2, **caractérisé en ce que** la partie de palier inférieure (13) du vilebrequin (5) et les deux parties de palier supérieures (12) des deux arbres de Lanchester (42, 43) juxtaposés ainsi que la partie de palier inférieure (21) pour le troisième arbre (22) du Lanchester sont reliées les unes aux autres ou forment une unité structurelle ou un composant (44).

4. Dispositif selon les revendications 1 et 3, **caractérisé en ce que** le composant d'un seul tenant (44) est relié de façon détachable à la partie de palier supérieure (7) du vilebrequin (5) et/ou à des parties du carter de vilebrequin (1) via des éléments de liaison.

5. Dispositif selon l'une des revendications précédentes, **caractérisé en ce que** le composant d'un seul tenant (44) est relié à la partie de palier supérieure (7) du vilebrequin (5) et/ou à la culasse (47) via des vis à tirants d'ancrage (23).

6. Dispositif selon l'une des revendications précédentes, **caractérisé en ce que** le composant d'un seul tenant (44) est relié à la partie de palier supérieure (7) du vilebrequin (5) via des vis à tirants d'ancrage (23) et en supplément au carter de vilebrequin (1) ou à un coussinet d'appui via des éléments de vissage transversaux (24).

7. Dispositif selon l'une des revendications précédentes, **caractérisé en ce qu'**une roue menée (14) est prévue sur le vilebrequin (5), qui est reliée en termes d'entraînement à un premier arbre de Lanchester (42) via une première roue menante (17) qui est à son tour en liaison d'entraînement avec une deuxième roue menante (18) du deuxième arbre de Lanchester (43).

8. Dispositif selon l'une des revendications précédentes, **caractérisé en ce que** la roue menée (14) agencée sur le vilebrequin (5) est en liaison d'entraînement avec le premier arbre de Lanchester (42) via la première roue menante (17) et avec le troisième arbre de Lanchester (22) via une troisième roue menante (54).

9. Dispositif selon l'une des revendications précédentes, **caractérisé en ce que** les paliers ou les coques de palier (27 à 29) du vilebrequin (5) et/ou les paliers ou les coques de palier des arbres de Lanchester (42, 43) sont constitué(e)s du même ou approximativement du même matériau présentant le même ou approximativement le même coefficient de dilatation thermique que le vilebrequin (5).
